# EUROPÄISCHE PATENTSCHRIFT

(11) **EP 3 404 808 B1**
(45) Veröffentlichungstag und Bekanntmachung des Hinweises auf die Patenterteilung: **07.10.2020**
(21) Anmeldenummer: 18175830.1
(22) Anmeldetag: 07.08.2014
(51) Int. Cl.: H02K 7/14, H02K 9/06, F04D 29/58, F04D 29/32

(54) **ROTORNABENANORDNUNG, ELEKTRISCHER LÜFTER**
ROTOR HUB ARRANGEMENT, ELECTRIC FAN
DISPOSITIF FORMANT MOYEU DE ROTOR, VENTILATEUR ÉLECTRIQUE

(30) Priorität: 09.08.2013 DE 102013215808
(43) Veröffentlichungstag der Anmeldung: 21.11.2018
(62) Teilanmeldung aus: 14750348.6
(73) Patentinhaber: Brose Fahrzeugteile SE & Co. Kommanditgesellschaft, Würzburg, 97076 Würzburg (DE)
(72) Erfinder: DRESBACH, Sascha, 97070 Würzburg (DE); EVERS, Andre, 26125 Oldenburg (DE); GASS, Alexander, 10969 Berling (DE); ROHM, Franziska, 97070 Würzburg (DE); SCHÄFER, Tilman, 26188 Edewecht (DE)
(74) Vertreter: FDST Patentanwälte

(56) Entgegenhaltungen:
- EP-A1- 2 083 506
- WO-A1-99/07999
- DE-A1- 3 917 040
- US-A1- 2006 119 195

## Beschreibung

### GEBIET DER ERFINDUNG

Die vorliegende Erfindung betrifft eine Rotornabenanordnung für einen elektrischen Lüfter sowie einen elektrischen Lüfter.

### TECHNISCHER HINTERGRUND

Belüftete Rotornaben werden an elektrischen Lüftern eingesetzt, um die Komponenten des Elektromotors im Betrieb zu kühlen. Insbesondere bei Lüftern für Kraftfahrzeugkühler ist eine Kühlung des Elektromotors unerlässlich. Diese müssen bei sehr unterschiedlichen Temperaturen eine hohe Funktionssicherheit aufweisen, da mit erhöhter Temperatur der Leiter auch deren Widerstand und somit die Verlustleistung, welche wiederum in Wärme umgesetzt wird, steigt, was bis hin zur Zerstörung der elektrischen Komponenten und Bauteile des Elektromotors (d.h. der Ansteuerelektronik, der Leistungsschalter und der Wicklungen) und damit zum Ausfall des Elektromotors führen kann.

Das Europäische Patent EP 1 623 122 B1 beschreibt eine solche belüftete Rotornabe eines Kraftfahrzeuglüfters. Dabei weist eine Nabe des Lüfterrades an ihrer Innenseite Rippen auf, welche als zentrifugale Lüfterschaufeln fungieren. Somit wird ein Luftstrom durch den Elektromotor bereitgestellt, welcher von der Druckseite des Lüfters angesaugt, innerhalb der Nabe durch die Form der Rippen umgekehrt und wieder zur Druckseite hin ausgeblasen wird. Ferner weist die Nabe an ihrer zur Unterdruckseite orientierten Flachseite Schlitze auf, welche im Bereich der Rippen in einem gewissen Radiusabschnitt derart vorgesehen sind, dass ein äußerer Teil der Nabe ausschließlich über die Rippen mit einem inneren Teil der Nabe verbunden ist. Diese Konstruktion dient der Beeinflussung des Torsionsschwingungsverhaltens der Rotornabe. Eine Beeinflussung der Luftströmung mittels der Schlitze ist nicht beschrieben.

Document US 2006/119195 offenbart eine verwandte Rotornabenanordnung.

### ZUSAMMENFASSUNG DER ERFINDUNG

Vor diesem Hintergrund liegt der vorliegenden Erfindung die Aufgabe zugrunde, eine verbesserte Rotoranordnung anzugeben. Erfindungsgemäß wird diese Aufgabe durch eine Rotoranordnung mit den Merkmalen des Patentanspruchs 1 und/oder durch einen Kühlerlüfter mit den Merkmalen des Patentanspruches 12 gelöst.

Demgemäß ist vorgesehen:
- Eine Rotornabenanordnung für einen elektrischen Lüfter, insbesondere für einen Kühlerlüfter eines Kraftfahrzeugs, mit einem im Betrieb rotierenden Nabentopf, der an seiner Innenseite Luftaustrittsführungen aufweist, die derart angeordnet und geformt sind, dass sie Kühlluft führen und beschleunigen, dadurch gekennzeichnet, dass innerhalb des Nabentopfs ein Rückschlusstopf angeordnet ist, der Luftdurchtrittsöffnungen aufweist, welche gemeinsam mit den Luftaustrittsführungen durchgehende Luftauslässe für einen Kühlluftstrom von der Druckseite zur Unterdruckseite des Lüfters bilden.
- Ein elektrischer Lüfter, insbesondere Kühlerlüfter eines Kraftfahrzeugs, mit einem Elektromotor, mit einer Druckseite und einer Unterdruckseite, wobei der Lüfter eine erfindungsgemäße Rotornabenanordnung aufweist und derart ausgebildet und ausgelegt ist, Luft von der Unterdruckseite zur Druckseite zu fördern.

Die der vorliegenden Erfindung zugrunde liegende Idee besteht darin, eine Kühlluftströmung zur Verfügung zu stellen, die einerseits durch das Druckgefälle von der Druckseite zur Unterdruckseite und andererseits durch die rotierenden Luftaustrittsführungen befördert wird. Dazu werden an der Unterdruckseite des Lüfters Luftdurchtrittsöffnungen im Rückschlusstopf und Luftaustrittsführungen im Nabentopf vorgesehen, welche den Kühlluftstrom gemeinsam von der Druckseite zur Unterdruckseite leiten. Ferner sind zumindest die Luftaustrittsführungen am rotierenden Nabentopf derart geformt, dass sie den Kühlluftstrom zusätzlich befördert.

Vorteilhaft wird dadurch der Elektromotor mit Kühlluft durchströmt und insbesondere der Rückschlusstopf, welcher im Einbauzustand als Rotorelement die Magnete des Elektromotors hält, vom Kühlluftstrom durchströmt und abschnittsweise überströmt. Auf diese Weise werden gleichsam die im Rückschlusstopf vorhandenen elektrischen Bauteile, wie etwa die Ansteuerelektronik, die Leistungsschalter, die Windungen des Motors und der Motor selbst, vom Kühlluftstrom gekühlt.

Ferner wird der Kühlluftmassenstrom durch die Ausnutzung zweier Effekte, des Druckgefälles und der Schaufelwirkung der Luftaustrittsführungen, zur Beschleunigung des Kühlluftstromes erhöht. Insgesamt ergibt sich somit ein erhöhter konvektiver Wärmeübergang, insbesondere auch vom Rückschlusstopf zur Kühlluft, was in einer höheren Kühlleistung resultiert.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Ausführungsform sind die Luftdurchtrittsöffnungen und Luftaustrittführungen derart ausgebildet, dass die Kühlluft zumindest teilweise in radialer Richtung ausgelassen wird. Insbesondere ist hier ein Versatz Luftdurchtrittsöffnungen und Luftaustrittführungen vorhanden. Bevorzugt weisen dabei die Luftaustrittsführungen eine solche Kontur auf, die zum radialen Beschleunigen der Kühlluft ausgelegt und vorgesehen ist. Somit wird zusätzlich zur durch das Druckgefälle zwischen Druckseite und Unterdruckseite bedingten axialen Beschleunigung eine radiale Beschleunigung der Kühlluft erreicht. Die Luftströmung erhält dadurch zumindest eine radiale Richtungskomponente. Dies ist vorteilhaft, weil auch Randbereiche des Elektromotors, insbesondere des Rückschlusstopfes, von der Kühlluft durchströmt bzw. überströmt werden. Somit werden die von der Kühlluft effektiv überströmte Fläche und insgesamt die Kühlleistung durch konvektiven Wärmeübergang erhöht.

Gemäß einer vorteilhaften Ausführungsform sind die Luftaustrittsführungen flügelradartig ausgebildet. Die Form entspricht dabei einem Flügelrad, welches dazu ausgebildet ist, ein in seinem Zentrum ankommendes Fluid radial zu beschleunigen. Somit wird eine strömungsmechanisch optimierte Formgebung der Luftaustrittsführungen bereitgestellt.

Gemäß einer weiteren vorteilhaften Ausführungsform weisen die Luftaustrittsführungen sich zwischen dem Boden des Nabentopfes und dem Rückschlusstopf erstreckende Rippen auf. Bevorzugt sind diese Rippen einteilig mit dem Nabentopf ausgebildet. Somit wird der Zwischenraum zwischen Nabentopf und Rückschlusstopf vorteilhaft zum Führen und Beschleunigen des Kühlluftstromes in radialer Richtung genutzt. Der Rückflusstopf und der Nabentopf bilden dabei bevorzugt gemeinsam ein Flügelrad aus.

Bei bevorzugten Ausführungsformen verlaufen die Rippen in radialer Richtung und optional oder zusätzlich bogenartig in radialer und umfänglicher Richtung. Somit wird vorteilhaft eine in strömungstechnischer Hinsicht optimierte flügelradartige Ausbildung bereitgestellt, welche entsprechend dem gewünschten Luftmassenstrom der Kühlluft ausgelegt werden kann.

Bei vorteilhaften Ausführungsformen ist der Rückschlusstopf aus einem metallischen Material, insbesondere Stahl, gefertigt. Bevorzugt handelt es sich dabei um ein Tiefziehteil. Optional oder zusätzlich ist der Nabentopf aus einem nichtmetallischen Material, insbesondere aus Kunststoff, gefertigt. Bevorzugt handelt es sich dabei um ein Spritzgussteil. Mit diesen Ausgestaltungen wird insgesamt eine optimierte Materialzuweisung bereitgestellt. Im Falle des Rückschlusstopfes wird ein mechanisch hochfestes, und zudem wärmeleitfähiges Material bereitgestellt. Dieses ist insbesondere elektromagnetisch und festigkeitstechnisch optimiert ausgebildet und somit zur Ausbildung eines Rückschlusstopfes vorteilhaft. Hinsichtlich des Nabentopfes wird ein Material verwendet, welches schon im Urformprozess sehr frei gestaltbar ist. Somit können die Rippen problemlos schon beim Herstellungsprozess des Nabentopfes, insbesondere beim Spritzgießen, mit geformt werden. Insgesamt werden somit die Stärken des jeweiligen Werkstoffes anforderungsgerecht genutzt und eingesetzt.

Bei einer bevorzugten Ausführungsform ist der Rückschlusstopf in einer vorbestimmten Position relativ zum Nabentopf drehfest mit dem Nabentopf gekoppelt. Somit können die Luftauslässe vorteilhaft auf einfache Weise durchgehend vorgesehen werden, indem die Luftdurchtrittsöffnungen und die Luftaustrittsführungen miteinander überdeckend angeordnet werden. Beispielsweise können dazu Anbringungspunkte zur drehfesten Kopplung vorgesehen sein, die derart angeordnet sind, dass sich beim Anbringen des Nabentopfes am Rückschlusstopf eine entsprechende Überdeckung einstellt.

Bei einer Ausführungsform weist der Rückschlusstopf einen Boden auf, der einen entgegen dem Nabentopf orientierten umlaufenden Absatz aufweist, wobei die Luftdurchtrittsöffnungen im Bereich des Absatzes und optional oder zusätzlich vom Absatz radial nach außen verlaufend angeordnet sind. Durch den Absatz im Boden des Rückschlusstopfes wird auf vorteilhafte, einfache Weise ein Zwischenraum zwischen Nabentopf und Rückschlusstopf geschaffen, in welchem sich die Rippen erstrecken. Ferner wird dadurch, dass die Luftdurchtrittsöffnungen im Bereich des Absatzes und/oder vom Absatz radial nach außen verlaufend angeordnet sind, der Rückschlusstopf vorteilhaft in die Bildung der Luftauslässe eingebunden. Der Boden entspricht einem Boden der Topfform des Rückschlusstopfes und ist als eine sich in einer radialen Ebene erstreckende Fläche ausgebildet.

Die Luftaustrittsführungen bilden jeweils einen im Wesentlichen radial ausgerichteten Luftauslass aus. Im Wesentlichen radial ist dahingehend zu verstehen, dass auch eine zusätzliche axiale Neigung und/oder eine zusätzliche Neigung in Umfangsrichtung des Luftauslasses vorgesehen sein kann, welche jedoch die Luftströmung in radialer Richtung nicht behindert.

Durch die Einsparung einer Umlenkung der austretenden Kühlluft wird der Strömungswiderstand des Luftauslasses vermindert. Somit werden die Effektivität und die Effizienz der Kühlung erhöht.

Der Luftauslass ist in einer Vertiefung in einem Boden des Nabentopfes eingelassen ausgebildet. Optional oder zusätzlich ist der Luftauslass dabei in einer Ausnehmung der Umfangswand des Nabentopfes ausgebildet. Somit wird der Kühlluftstrom in radialer Richtung nach außen geleitet, ohne dass er dabei in axialer Richtung umgeleitet werden müsste. Er kann somit in radialer Richtung ausströmen. Besonders vorteilhaft kann sich der Kühlluftstrom am Luftauslass somit auch leicht wieder in den Hauptluftstrom des Lüfters, welcher senkrecht dazu in axialer Richtung von der Unterdruckseite zur Druckseite verläuft, einfügen. Vorteilhaft werden somit keine Störungen des Hauptluftstromes des Lüfters hervorgerufen. Ferner wird der Ausströmwiderstand beim Auslassen der Kühlluft verringert.

Bei vorteilhaften Ausführungsformen weist der Luftauslass eine die Schaufelfläche der Luftaustrittsführungen nach außen weiterführende Tasche auf. Somit wird die Schaufelfläche der Luftaustrittsführungen bzw. insbesondere der Rippen, vorteilhaft vergrößert, wodurch ein höherer Luftmassenstrom gefördert werden kann. Optional oder zusätzlich ist der Luftauslass mit einer umfänglich in Drehrichtung zum Luftauslass orientierten axialen Erhöhung und einer umfänglich entgegen der Drehrichtung zum Luftauslass orientierten axialen Vertiefung ausgebildet. Somit wird die in radialer Richtung ausströmende Kühlluft gegen die auf der Unterdruckseite vor dem rotierenden Nabentopf entlang strömende Luft durch die Erhöhung abgeschirmt, was strömungsmechanisch vorteilhaft den austretenden Kühlluftstrom vor Störungen bewahrt. Ferner wird der ausströmenden Kühlluft durch die Vertiefung ein erhöhter Auslassquerschnitt zur Verfügung gestellt, was ebenfalls strömungsmechanisch günstig ist und insbesondere den Ausströmwiderstand zusätzlich verringert.

Bei einer Ausführungsform weist der Rückschlusstopf eine Mehrzahl unterschiedlicher Arten und Größen von Aussparungen auf. Bevorzugt sind dabei sich radial mit konstantem Öffnungswinkel aufweitende Langlöcher vorgesehen. Diese befinden sich bevorzugt im Zentrum des Rückschlusstopfes nahe der Rotationsachse. Ferner sind optional oder zusätzlich Ausnehmungen zum Ausbilden von Speichen vorgesehen, wobei die Ausnehmungen bevorzugt gleichzeitig die Luftdurchtrittsöffnungen ausbilden. Somit wird das Gewicht des Rückschlusstopfes reduziert und zudem eine bessere Luftdurchströmung erreicht. Ferner kann durch die Aussparungen die Steifigkeit des Rotors, zu welcher der Rückschlusstopf gehört, gezielt beeinflusst werden, wodurch eine Verbesserung der Akustik des Lüfters erreicht werden kann. Bevorzugt ist dazu eine maximale Menge von, insbesondere regelmäßig über den Umfang verteilten, an elektromagnetisch und festigkeitstechnisch unkritischen Stellen angeordneten Aussparungen vorgesehen.

Bei einer weiteren Ausführungsform sind im Boden des Rückschlusstopfes Aussparungen als axiale Luftdurchtrittsöffnungen ausgebildet. Ferner sind im Zentrum des Bodens des Nabentopfes Aussparungen vorgesehen, welche als axiale Luftaustrittsführungen ausgebildet sind. Die axialen Luftdurchtrittsöffnungen und die axialen Luftaustrittsführungen bilden gemeinsam durchgehende axiale Luftauslässe zum Auslassen von Kühlluft in axialer Richtung. Somit wird zusätzlich zum radialen Auslassen von Kühlluft auch noch ein axialer Kühlluftauslass bereitgestellt. Die Kühlluft kann damit gleichzeitig in axialer und radialer Richtung ausgelassen werden, was den Luftmassenstrom der Kühlluft vorteilhaft erhöht.

Bei einer bevorzugten Ausführungsform eines elektrischen Lüfters ist an der Druckseite eine Einlassöffnung vorgesehen. Diese ist bevorzugt als umlaufender Einlassspalt bzw. Ringspalt, ausgebildet und als Einlass für den Kühlluftstrom von der Druckseite zur Unterdruckseite vorgesehen. Somit befindet sich die Einlassöffnung auf der den Auslässen gegenüberliegenden Seite des Lüfters. Bevorzugt befindet sich die Einlassöffnung bzw. der Luftspalt hinter dem Nabentopf und dem Rückschlusstopf bzw. zwischen deren Rückseite und einem Basishalter des Elektromotors. Der Basishalter, der vorzugsweise die Ansteuerelektronik und die Leistungsschalter trägt, ist bevorzugt aus Aluminium gefertigt und damit als Aluminiumdeckel ausgebildet. Vorzugsweise ist der Basishalter ein Spritzgusselement, welches an seiner Außenseite eine Vielzahl von vom Basishalter abstehende Flügel aufweist. Über diese Maßnahme wird die Oberfläche des als Kühlkörper fungierenden Basishalters vergrößert, sodass dadurch die Kühlleistung zur Kühlung der Ansteuerelektronik und die Leistungsschalter zusätzlich gesteigert werden kann.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: einen der Anmelderin bekannten Rückschlusstopf;
- Fig. 2: eine erfindungsgemäße Rotornabenanordnung bzw. einen erfindungsgemäßen elektrischen Lüfter in einer perspektivischen Darstellung, in welcher der Nabentopf noch nicht montiert ist.
- Fig. 3a: den Lüfter gemäß Fig. 2 im montierten Zustand in einer perspektivischen Teildarstellung;
- Fig. 3b: eine Schnittdarstellung des Lüfters gemäß Fig. 3a entlang der darin eingezeichneten Schnittebene;
- Fig. 4a: eine perspektivische Vorderansicht eines Nabentopfes in einer ersten Ausführungsform;
- Fig. 4b: eine perspektivische Rückseitenansicht des Nabentopfes;
- Fig. 5a: eine Vorderansicht eines Rückschlusstopfes;
- Fig. 5b: eine Querschnittsansicht eines Rückschlusstopfes gemäß Fig. 5a entlang der darin eingezeichneten Schnittebene;
- Fig. 6: den Nabentopf gemäß Fig. 4a und 4b in einer Teildarstellung der Rückseitenansicht gemäß Fig. 4b;
- Fig. 7: einen Nabentopf gemäß einem zweiten Ausführungsbeispiel in Teildarstellung einer perspektivischen Rückseitenansicht;
- Fig. 8a: eine Teildarstellung einer perspektivischen Vorderansicht eines Nabentopfes gemäß einem dritten Ausführungsbeispiel;
- Fig. 8b: eine Querschnittsdarstellung eines Lüfters mit einem Nabentopf gemäß Fig. 8a in der darin eingezeichneten Schnittebene;
- Fig. 9a: eine perspektivische Vorderansicht einer Teildarstellung eines Lüfters mit einem Nabentopf gemäß einem vierten Ausführungsbeispiel;
- Fig. 9b: eine Querschnittsansicht des Lüfters gemäß Fig. 9a in der darin eingezeichneten Schnittebene.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

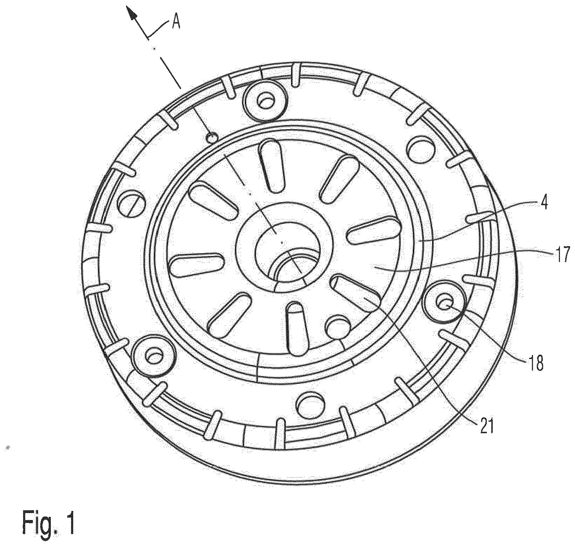

Figur 1 zeigt einen der Anmelderin intern bekannten Rückschlusstopf 4 eines Kühlerlüfters 30, mittels welchem ein Kühlluftstrom im Elektromotor durch Ausnutzung des Druckgefälles zwischen Druckseite und Unterdruckseite des Lüfters erzeugt wird. Die Unterdruckseite wird meist auch als Saugseite bezeichnet, da die Luft aufgrund des Druckgefälltes gewissermaßen angesaugt wird. Dazu wird eine vorbestimmte Kurzschlussluftströmung durch den Elektromotor ermöglicht. In einem zentralen Bereich des Bodens 17 des Rückschlusstopfes sind Öffnungen 21 vorgesehen. Diese sind als acht Langlochöffnungen für den Kurzschlussluftströmungem im Zentrum, d.h. nahe der Rotationsachse ausgebildet. Abgesehen von drei Anbringungspunkten 18 mit Gewindebohrungen und den Langlochöffnungen 21 weist der Boden 17 eine im Wesentlichen geschlossene Oberfläche auf. Bei einem nicht dargestellten zugehörigen Nabentopf wären entsprechende Öffnungen im Zentrum zum Auslassen der Kurzschlussluftströmung vorgesehen.

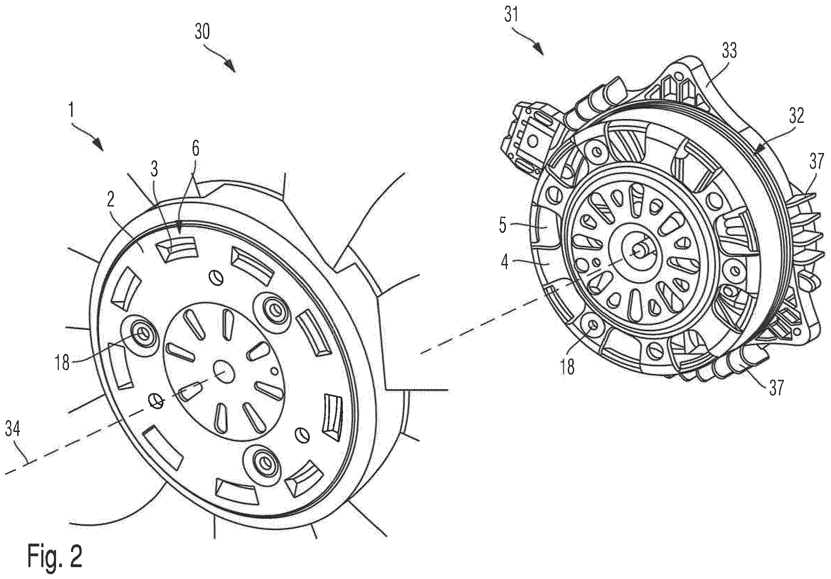

Figur 2 zeigt einen elektrischen Lüfter 30 bzw. eine Rotornabenanordnung 1 gemäß der vorliegenden Erfindung. Der elektrische Lüfter 30 weist einen Elektromotor 31 auf, welcher unter anderem einen Rückschlusstopf 4 enthält. Im Rückschlusstopf 4 sind Luftdurchtrittsöffnungen 5 vorgesehen. Elektromotoren der dargestellten Bauart weisen als um die Rotationsachse 34 rotierenden Rotor bzw. Läufer einen solchen Rückschlusstopf 4 auf, an welchem insbesondere nicht dargestellte Permanentmagnete befestigt sind. Am Stator sind Elektromagnete in an sich bekannter Weise vorgesehen. Es handelt sich dabei vorzugsweise um einen Außenläufermotor.

Der Elektromotor 31 weist ferner einen Basishalter 33 zum Beispiel aus Aluminium oder einer Aluminium enthaltenden Legierung auf, welcher zur strukturellen Anbindung des Lüfters 30 an eine Lüfterzarge eines Kraftfahrzeugs vorgesehen ist. Der Basishalter 33, der vorzugsweise die Ansteuerelektronik und die Leistungsschalter trägt, ist bevorzugt als spritzgegossener Aluminiumdeckel ausgebildet. Der Basishalter 33 weist an seiner Außenseite eine Vielzahl von vom Basishalter 33 abstehende, rippenartige Flügel 37 auf. Diese Flügel 37 dienen der Vergrößerung der Oberfläche des als Kühlkörper fungierenden Basishalters 33, sodass dadurch die Kühlleistung erhöht wird.

Zwischen dem Basishalter 33 und dem Rückschlusstopf 4 ist ein Einlassspalt 32 zum Einlassen von Kühlluft vorgesehen. Axial auf den Rückschlusstopf wird mit jeweils drei am Rückschlusstopf und am Nabentopf vorgesehenen Anbringungspunkten 18 der Nabentopf 2 angebracht. Beispielsweise sind hier drei Befestigungspunkte vorgesehen, an welchen jeweils ein nicht dargestelltes Befestigungsmittel anbringbar ist.

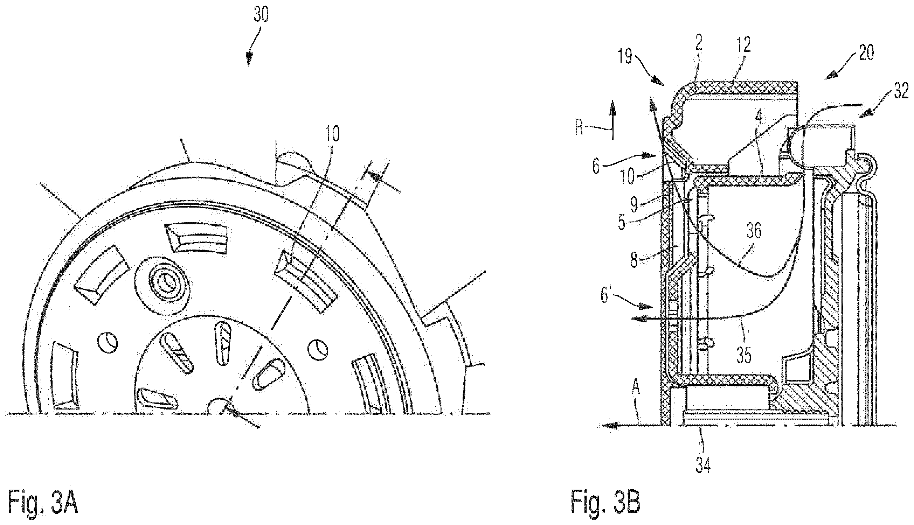

Der Nabentopf 2 weist Luftaustrittsführungen 3 auf, welche im montierten Zustand zusammen mit den Luftdurchtrittsöffnungen 5 Luftauslässe 6 ausbilden. Zur Kühlung des Elektromotors 31 strömt Kühlluft durch den Einlassspalt 32 in den Elektromotor ein und durchströmt den Rückschlusstopf 4 bzw. die darin vorhandene Ansteuerelektronik, Leistungsschalter, Windungen, Elektromotor, wobei die Kühlluft durch die Luftauslässe 6 wieder aus dem Elektromotor 31 bzw. der Rotornabenanordnung 1 austritt. Dies ist in Figur 3b genauer dargestellt.

Figur 3a zeigt einen Lüfter 30 gemäß Figur 2 in einem montierten Zustand in einer perspektivischen Vorderansicht in Teildarstellung. Dabei ist die obere Hälfte der Nabe des Lüfters 30 dargestellt. Mit dicken Pfeilen und einer dicken Strichpunktlinie ist dabei die Schnittebene des Querschnitts gemäß Figur 3b eingezeichnet.

Figur 3b zeigt die Querschnittsdarstellung des Lüfters 30 gemäß Figur 3a in der darin eingezeichneten Schnittebene. Der Lüfter 30 weist eine Unterdruckseite 19 und eine Druckseite 20 auf. Der Lüfter 30 ist dazu ausgebildet und vorgesehen, im Betrieb Luft von der Unterdruckseite 19 zur Druckseite 20 zu befördern. Dadurch entsteht ein Druckgefälle zwischen der Druckseite 20 und der Unterdruckseite 19, welches gemäß der vorliegenden Erfindung zur Beschleunigung eines Kühlluftstromes in Form einer Kurzschlussluftströmung von der Druckseite 20 zur Unterdruckseite 19 ausgenutzt wird. In der dargestellten Ausführungsform ist der Luftstrom durch den Nabentopf 2 und Elektromotor 31 des Lüfters 30 mit geschwungenen Pfeilen 35, 36 angedeutet. Von der Druckseite 20 tritt der Kühlluftstrom am Einlassspalt 32 in den Elektromotor 31 und in die Rotornabenanordnung 1 ein. Ein erster Kühlluftstrom 35 verläuft (im Wesentlichen) in axialer Richtung A und tritt durch einen axialen Luftauslass 6', welcher sich im Zentrum der Rotornabenanordnung befindet, aus derselben aus. Ein zweiter Kühlluftstrom 36 tritt durch die Luftdurchtrittsöffnung 5 (im Wesentlichen) in axialer Richtung A durch den Rückschlusstopf 4 hindurch in einen Zwischenraum zwischen Rückschlusstopf 4 und Nabentopf 2. In diesem Zwischenraum, welcher sich zwischen dem Boden 9 des Nabentopfes 2 und dem Rückschlusstopf 4 erstreckt, befinden sich Rippen 8, welche einteilig am Boden 9 des Nabentopfes 2 angeformt sind. Die Rippen 8 weisen eine Flügelradkontur auf, welche die Kühlluft im Betrieb durch die Rotation der Rotoranordnung 1 um die Rotationsachse 34 in radialer Richtung R befördert. Die Rippen 8 sind somit Teil der Luftaustrittsführungen 3. Die Kühlluft 36 strömt dabei (im Wesentlichen) radial in Richtung des Luftauslasses 6, welcher durch eine Vertiefung 10 im Boden 9 des Nabentopfes 2 sowie die Luftdurchtrittsöffnung 5, die sich bis zu einem Rand des Rückflusstopfs 4 erstreckt, ausgebildet ist.

In der dargestellten Ausführungsform wird die Kühlluft somit zusätzlich zur axialen Durchströmung, welche aufgrund des Druckgefälles stattfindet, auch in radiale Richtung R befördert. Ferner wird die radial beförderte Kühlluft im Wesentlichen in radialer Richtung, das heißt in einer aus axialer und radialer Richtung zusammengesetzten Richtung, wobei der radiale Anteil vorteilhafterweise überwiegt, ausgelassen.

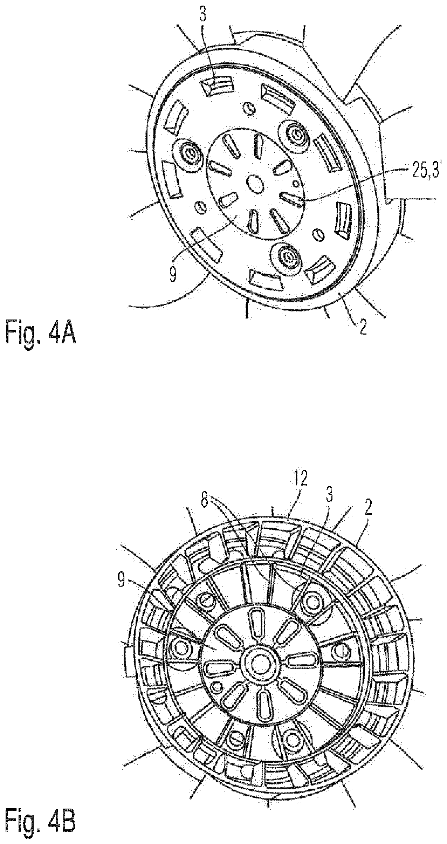

Figur 4a zeigt einen Nabentopf 2 gemäß der in Figur 2 dargestellten Ausführungsform. Figur 4b zeigt den Nabentopf 2 gemäß Figur 4a in einer rückseitigen, perspektivischen Ansicht. Der Nabentopf 2 weist einen Boden 9 und daran angeformte Rippen 8 auf. Ferner sind nahe des Übergangs zwischen Umfangswand 12 und Boden 9 des Nabentopfes radial ausgerichtete Luftaustrittsführungen 3 ausgebildet, zu welchen die Rippen 8 gehören. Die Rippen 8, die auch hier eine Flügelradkontur aufweisen, verlaufen in dieser Ausführungsform dementsprechend radial. Ferner sind in einem zentralen Bereich des Bodens 9 nahe der Rotationsachse 34 Aussparungen 25 vorgesehen, welche axiale Luftaustrittführungen 3' bilden.

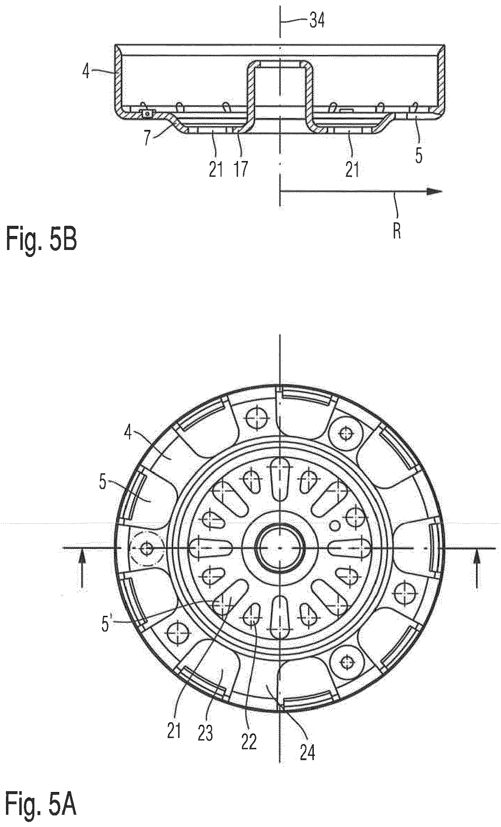

Figur 5a zeigt eine Vorderansicht eines Rückschlusstopfes 4 gemäß dem in Figur 2 dargestellten Ausführungsbeispiel. Dieser weist im Zentrum nahe der Rotationsachse 34 Langlöcher mit konstantem Öffnungswinkel auf, welche sich in radialer Richtung aufweiten. Dabei sind größere Langlöcher 21 und kleinere Langlöcher 22 vorgesehen. Die großen Langlöcher 21 bilden axiale Luftdurchtrittsöffnungen 5' aus. Ferner sind Ausnehmungen 23 vorgesehen, welche Speichen 24 im äußeren Bereich des Rückschlusstopfes 4 ausbilden. Diese Ausnehmungen 23 bilden gleichzeitig die radialen Luftdurchtrittsöffnungen 5 aus.

Figur 5b zeigt eine Querschnittsansicht des Rückschlusstopfes 4 gemäß Figur 5a, wobei die Schnittebene gemäß der dicken Strichpunktlinie in Figur 5a durch das Zentrum des Rückschlusstopfes verläuft. Darin ist ein Boden 17 des Rückschlusstopfes 4 dargestellt, in welchem ein Absatz 7 vorgesehen ist. Der Absatz 7 trennt den zentralen Bereich des Bodens 17 von einem äußeren Bereich des Bodens 17, wobei dem zentralen Bereich die Langlöcher 21, 22 und im äußeren Bereich die Ausnehmungen 23 bzw. Luftdurchtrittsöffnungen 5 vorgesehen sind. Ferner ist die radiale Richtung R eingezeichnet, entlang welcher die Luftdurchtrittsöffnungen 5 ein Austreten von Kühlluft aus dem Zentrum des Rückschlusstopfes erlauben. In einem zusammengebauten Zustand der Rotornabenanordnung sind die Luftaustrittsführungen 3 des Nabentopfes 2 mit den Luftdurchtrittsöffnungen 5 des Rückschlusstopfes 4 axial versetzt angeordnet und die Langlöcher 21 mit den Aussparungen 25 axial fluchtend angeordnet. Somit werden in radialer und in axialer Richtung jeweils Luftauslässe 6, 6' bereitgestellt.

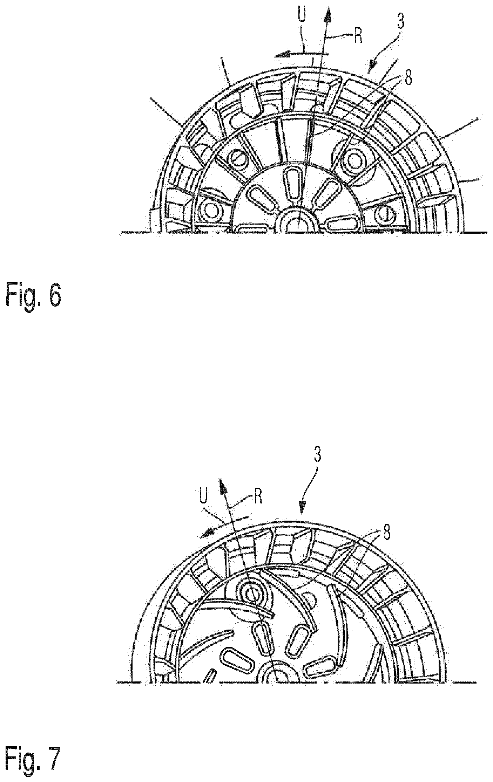

Figur 6 zeigt den Nabentopf gemäß Figur 4b in einer Teilansicht. Dabei sind die radiale Richtung R und die Umfangsrichtung U eingezeichnet, welche sich jeweils auch die Rotationsachse des Nabentopfes 2 beziehen. Die dargestellte Ansicht dient vor allem dem direkten Vergleich zu dem daneben in Figur 7 dargestellten Ausführungsbeispiel.

Figur 7 zeigt den Nabentopf 2 gemäß einem zweiten Ausführungsbeispiel in einer analog zu Figur 6 abgebildeten Darstellung einer perspektivischen Teilansicht der Rückseite. Im Unterschied zu Figur 6 ist in diesem Ausführungsbeispiel eine geänderte Form der Luftaustrittsführungen 3 vorgesehen. Diese weisen innere Rippen 8 auf, welche sich in einem inneren Bereich des Nabentopfes 2 flügelradartig sowohl in radialer Richtung R als auch in Umfangsrichtung U-bogenförmig erstrecken. Neben den inneren Rippen sind auch äußere Rippen 8' vorgesehen, welche sich in einem äußeren, kreisringförmigen Bereich des Nabentopfes 2 befinden und welche sich im Wesentlichen radial nach außen erstrecken. Somit bildet der Nabentopf 2 mit den Rippen 8, 8' im montierten Zustand gemeinsam mit dem Rückschlusstopf 4 im Bereich dieser Luftaustrittsführungen 3 ein Flügelrad aus, welches im Betrieb die Kühlluft in radialer Richtung R beschleunigt.

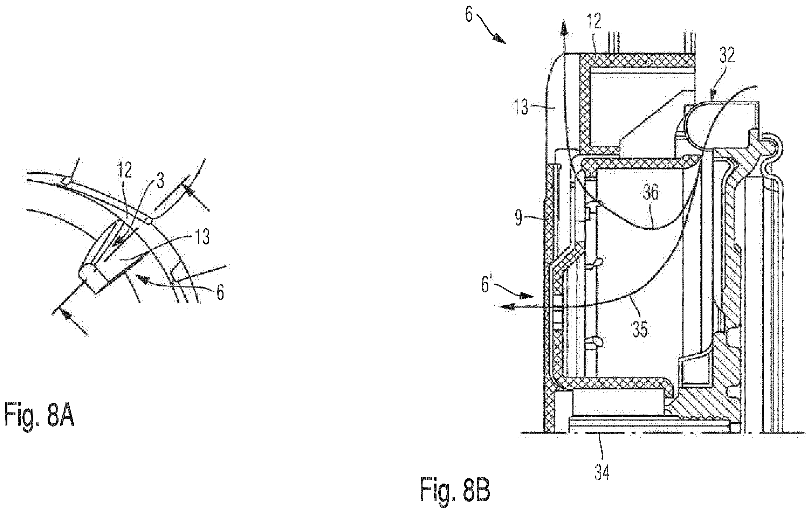

In Figur 8a ist ein drittes Ausführungsbeispiel eines Nabentopfes in einer perspektivischen Teildarstellung dargestellt. Es wird lediglich der Bereich einer Luftaustrittsführung 3 eines Luftauslasses 6 gezeigt. Die Luftauslassführung 3 weist in der dargestellten Ausführungsform eine Tasche 13 auf, welche bis zur Umfangswand 12 des Nabentopfes 2 gezogen ist.

Figur 8b zeigt einen Querschnitt durch einen Lüfter 30 mit einem solchen Nabentopf 2 gemäß Fig. 8a. Im Unterschied zu dem in Figur 3b dargestellten Lüfter 30 weist hier der Luftauslass 6 im Bereich der Tasche 13 eine zusätzliche, durch die Tasche 13 gebildete Schaufelfläche auf, welche zusätzlich zur Beschleunigung der Kühlluft in radialer Richtung R eingesetzt bzw. genutzt werden kann. Ferner ist der radiale Weg für die Kühlluftströmung gänzlich frei, da sich die Tasche 13 bis zur Umfangswand 12 des Nabentopfes erstreckt. Somit kann der Kühlluftstrom, wie mit dem dicken Pfeil in radialer Richtung R angedeutet, entlang der Tasche 13 radial bis über den Rand bzw. über die Umfangswand 12 des Nabentopfes 2 hinaus in radialer Richtung R ausströmen.

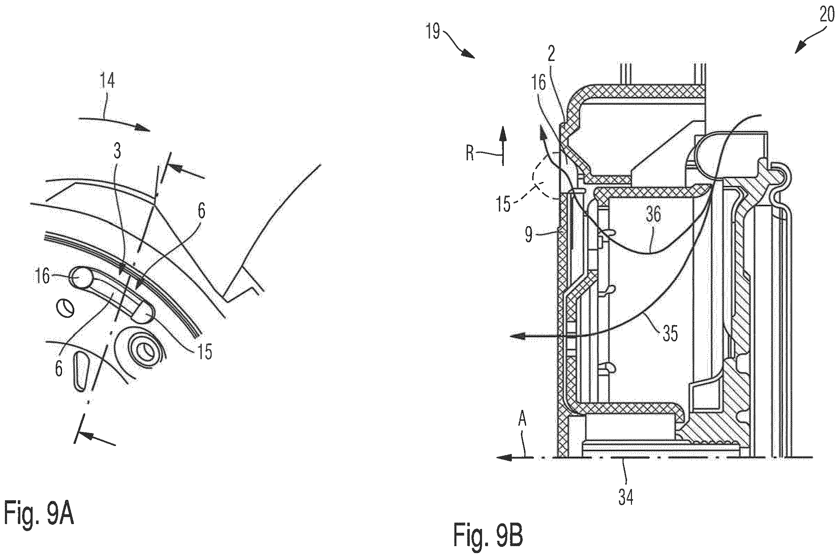

Figur 9a zeigt eine perspektivische Vorderansicht eines Lüfters 30 in Teildarstellung mit einem Nabentopf 2 gemäß einem vierten Ausführungsbeispiel. Dargestellt ist wiederum nur der Bereich einer Luftauslassführung 3 eines Luftauslasses 6. Der Lüfter 30 weist im Bereich des Luftauslasses 6 umfänglich eine in Drehrichtung 14 zum Luftauslass 6 orientierte Erhöhung 15 auf, welche sich in axialer Richtung A erstreckt. Ferner ist umfänglich zum Luftauslass 6 entgegen der Drehrichtung 14 orientiert eine axiale Vertiefung 16 neben dem Luftauslass 6 vorgesehen.

Figur 9b zeigt eine Querschnittsansicht des Lüfters 30 gemäß Figur 9a in der darin mit einer dicken Strichpunktlinie eingezeichneten Schnittebene. In dieser Querschnittsansicht ist die Vertiefung 16 am Nabentopf 2 eingezeichnet. Die Vertiefung weist eine Ausbildung in der Negativform eines Ellipsoidviertels auf, und ist in den Boden 9 des Nabentopfes 2 eingelassen. Ferner ist mit gestrichelten Linien eine Erhöhung 15 eingezeichnet. Die gestrichelten Linien symbolisieren lediglich die in der dargestellten Schnittansicht eigentlich nicht sichtbare Erhöhung 15. Zum besseren Verständnis und zur einfacheren Darstellung ist sie hier dennoch gestrichelt eingezeichnet. Die Erhöhung 15 weist ebenfalls eine Form eines Ellipsoidviertels auf, wobei eine Flachseite des Ellipsoidviertels den Rand des Luftauslasses 6 gegen Luftströmungen bzw. Störeinflüsse an der Unterdruckseite 19 im Betrieb abschirmt. Alternativ kann es sich auch um die Form eines hohlen Ellipsoidviertels handeln, so dass die Erhöhung 15 sozusagen eine Kappe über die Seite des Luftauslasses 6 bildet. Somit wird der Kühlluftströmung ein ungestörtes Ausströmen ermöglicht. Ferner wird durch die Vertiefung 16 an der umfänglichen Seite des Luftauslasses 6 ein vergrößerter Ausströmquerschnitt in Umfangsrichtung U bereitgestellt, was strömungstechnisch günstig ist und den Ausströmwiderstand am Luftauslass 6 verringern kann.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Rotornabenanordnung
- 2: Nabentopf
- 3, 3': Luftaustrittsführungen
- 4: Rückschlusstopf
- 5: Luftdurchtrittsöffnungen
- 6, 6': Luftauslässe
- 7: Absatz
- 8, 8': Rippen 9 Boden des Nabentopfes
- 10: Vertiefung

- 12: Umfangswand
- 13: Tasche
- 14: Drehrichtung
- 15: Erhöhung
- 16: Vertiefung
- 17: Boden des Rückschlusstopfes
- 18: Anbringungspunkte
- 19: Unterdruckseite
- 20: Druckseite
- 21: Aussparungen, Langlöcher im Rückschlusstopf
- 22: Aussparungen, Langlöcher im Rückschlusstopf
- 23: Aussparungen, Ausnehmungen im Rückschlusstopf
- 24: Speichen
- 25: Aussparungen im Nabentopf
- 30: Lüfter
- 31: Elektromotor
- 32: Einlassöffnung, Einlasspalt
- 33: Basishalter
- 34: Rotationsachse
- 35: Kühlluftstrom
- 36: Kühlluftstrom
- 37: Flügel am Basishalter

- R: radialer Richtung
- U: umfängliche Richtung

## Patentansprüche

1. Rotornabenanordnung (1) für einen elektrischen Lüfter (30), insbesondere für einen Kühlerlüfter eines Kraftfahrzeugs, aufweisend
- einen im Betrieb rotierenden Nabentopf (2), der an seiner Innenseite Luftaustrittsführungen (3) aufweist, die zur Führung und Beschleunigung von Kühlluft angeordnet und geformt sind,
- einen innerhalb des Nabentopfs (2) angeordneten Rückschlusstopf (4), der Luftdurchtrittsöffnungen (5) aufweist, welche gemeinsam mit den Luftaustrittsführungen (3) des Nabentopf (2) durchgehende Luftauslässe (6) für einen Kühlluftstrom von der Druckseite (20) zur Unterdruckseite (19) des Lüfters (30) bilden,
- **dadurch gekennzeichnet, dass**
die Luftaustrittsführungen (3) im Nabentopf (2) jeweils einen im Wesentlichen radial ausgerichteten Luftauslass (6) ausbilden, der in einer Vertiefung (10) in einem Boden (9) des Nabentopfes (2) eingelassen und/oder in einer Ausnehmung der Umfangswand (12) des Nabentopfes (2) ausgebildet ist, so dass der Kühlluftstrom in radialer Richtung nach außen geleitet wird.

2. Rotornabenanordnung nach Anspruch 1,
**dadurch gekennzeichnet,**
**dass** die Luftdurchtrittsöffnungen (5) und Luftaustrittsführungen (3) derart ausgebildet sind, dass die Kühlluft zumindest teilweise in radialer Richtung (R) ausgelassen wird.

3. Rotornabenanordnung nach einem der vorstehenden Ansprüche,
**dadurch gekennzeichnet,**
**dass** die Luftaustrittsführungen (3) flügelradartig ausgebildet sind.

4. Rotornabenanordnung nach Anspruch 3,
**dadurch gekennzeichnet,**
**dass** die Luftaustrittsführungen (3) sich zwischen dem Boden (9) des Nabentopfes und dem Rückschlusstopf erstreckende Rippen (8) aufweisen.

5. Rotornabenanordnung nach Anspruch 4,
**dadurch gekennzeichnet,**
**dass** die Rippen (8) in radialer Richtung (R) verlaufen und/oder bogenartig in radialer und umfänglicher Richtung (R, U) verlaufen.

6. Rotornabenanordnung nach einem der vorstehenden Ansprüche,
**dadurch gekennzeichnet,**
**dass** der Rückschlusstopf (4) aus einem metallischen Material, insbesondere aus Stahl, gefertigt ist und/oder dass der Nabentopf (2) aus einem nichtmetallischen Material, insbesondere aus Kunststoff, gefertigt ist.

7. Rotornabenanordnung nach einem der vorstehenden Ansprüche,
**dadurch gekennzeichnet,**
**dass** der Rückschlusstopf (4) in einer vorbestimmten Position relativ zum Nabentopf (2) drehfest mit dem Nabentopf (2) gekoppelt ist.

8. Rotornabenanordnung nach einem der vorstehenden Ansprüche,
**dadurch gekennzeichnet,**
**dass** der Rückschlusstopf (4) einen Boden (17) aufweist, der einen entgegen dem Nabentopf (2) orientierten umlaufenden Absatz (7) aufweist, wobei die Luftdurchtrittsöffnungen (5) im Bereich des Absatzes (7) und/oder vom Absatz (7) radial nach außen verlaufend angeordnet sind.

9. Rotornabenanordnung nach einem der vorstehenden Ansprüche,
**dadurch gekennzeichnet,**
**dass** der Luftauslass (6) eine die Schaufelfläche der Luftaustrittsführungen (3) nach außen weiterführende Tasche (13) aufweist und/oder mit einer umfänglich in Drehrichtung (14) zum Luftauslass (6) orientieren axialen Erhöhung (15) und einer umfänglich entgegen der Drehrichtung (14) zum Luftauslass (6) orientierten axialen Vertiefung (16) ausgebildet ist.

10. Rotornabenanordnung nach einem der vorstehenden Ansprüche,
**dadurch gekennzeichnet,**
**dass** der Rückschlusstopf (4) eine Mehrzahl unterschiedlicher Arten und Größen von Aussparungen (21, 22, 23), insbesondere sich radial mit konstantem Öffnungswinkel aufweitender Langlöcher (21, 22) und/oder Ausnehmungen (23) zum Ausbilden von Speichen (24), die insbesondere gleichzeitig die Luftdurchtrittsöffnungen (5) ausbilden, aufweist.

11. Rotornabenanordnung nach einem der vorstehenden Ansprüche,
**dadurch gekennzeichnet,**
**dass** im Zentrum des Bodens (17) des Rückschlusstopfes (4) Aussparungen (21, 22) als axiale Luftdurchtrittsöffnungen (5') ausgebildet sind und im Zentrum des Bodens (9) des Nabentopfes (2) Aussparungen (25) vorgesehen sind, welche als axiale Luftaustrittsführungen (3') ausgebildet sind und gemeinsam mit den axialen Luftdurchtrittsöffnungen (5') durchgehende axiale Luftauslässe (6') zum Auslassen von Kühlluft in axialer Richtung (A) bilden.

12. Elektrischer Lüfter (30), insbesondere Kühlerlüfter eines Kraftfahrzeugs,
- mit einem Elektromotor (31), und
- mit einer Druckseite (20), und einer Unterdruckseite (19), wobei der Lüfter (31) eine Rotornabenanordnung (1) gemäß einem der vorstehenden Ansprüche aufweist und derart ausgebildet und ausgelegt ist, Luft von der Unterdruckseite (19) zur Druckseite (20) zu fördern.

13. Elektrischer Lüfter nach Anspruch 12,
**dadurch gekennzeichnet,**
**dass** an der Druckseite (20) eine Einlassöffnung (32), insbesondere ein umlaufender Einlassspalt (32), für den Kühlluftstrom von der Druckseite (20) zur Unterdruckseite (19) vorgesehen ist.

## Claims

1. Rotor hub arrangement (1) for an electric fan (30), in particular for a radiator fan of a motor vehicle, comprising
- a hub cup (2) which rotates during operation and comprises air outlet guides on its inside (3), which are arranged and formed in such way that they guide and accelerate cooling air,
- a return cup (4) arranged inside the hub cup (2), said return cup comprising air passage openings (5), which form continuous air outlets (6) together with the air outlet guides (3) of the hub cup (2) for a cooling air stream from the pressure side (20) to the vacuum side (19) of the fan (30),
**characterized in**
**that** the air outlet guides (3) in the hub cup (2) each form a substantially radially oriented air outlet (6), which is embedded into a depression (10) in a base (9) of the hub cup (2) and/or is formed in a recess (11) in the circumferential wall (12) of the hub cup (2), so that the cooling air stream is directed outwards in the radial direction.

2. Rotor hub arrangement according to claim 1,
**characterized in,**
**that** the air passage openings (5) and air outlet guides (3) are formed in such way that the cooling air is discharged at least partially in the radial direction (R).

3. Rotor hub arrangement according to one of the preceding claims,
**characterized in**
**that** the air outlet guides (3) are formed as impellers.

4. Rotor hub arrangement according to claim 3,
**characterized in**
**that** the air outlet guides (3) comprise ribs (8) extending between the hub cup (9) and the return cup.

5. Rotor hub arrangement according to claim 4,
**characterized in**
**that** the ribs (8) run in the radial direction (R) and/or run arcuately in the radial and peripheral direction (R, U).

6. Rotor hub arrangement according to one of the preceding claims,
**characterized in**
**that** the return cup (4) is manufactured from a metallic material, in particular from steel, and/or that the hub cup (2) is manufactured from a non-metallic material, in particular from plastic.

7. Rotor hub arrangement according to one of the preceding claims,
**characterized in**
**that** the return cup (4) is coupled to the hub cup (2) in a predetermined position in a rotationally fixed manner relative to the hub cup (2).

8. Rotor hub arrangement according to one of the preceding claims,
**characterized in**
**that** the return cup (4) comprises a base (17) which comprises a circumferential shoulder (7) oriented against the hub cup (2), wherein the air passage openings (5) are arranged to run in the region of the shoulder (7) and/or radially outwardly from the shoulder (7).

9. Rotor hub arrangement according to one of the preceding claims,
**characterized in**
**that** the air outlet (6) comprises a pocket (13) further guiding the blade surface of the air outlet guides (3) outwardly and/or is formed with an axial elevation (15), which is peripherally oriented in the direction of rotation (14) towards the air outlet (6), and an axial depression (16), which is peripherally oriented against the direction of rotation (14) towards the air outlet (6).

10. Rotor hub arrangement according to one of the preceding claims,
**characterized in**
**that** the return cup (4) comprises a plurality of different types and sizes of recesses (21, 22, 23), in particular elongated holes (21, 22) expanding radially with a constant opening angle and/or recesses (23) for forming spokes (24), which, in particular, simultaneously form the air passage openings (5).

11. Rotor hub arrangement according to one of the preceding claims,
**characterized in**
**that** in the centre of the base (17) of the return cup (4) recesses (21, 22) are formed as axial air passage openings (5') and in the centre of the base (9) of the hub cup (2) recesses (25) are provided, said recesses (25) being formed as axial air outlet guides (3') and forming continuous axial air outlets (6') together with the axial air passage openings (5') for discharging cooling air in the axial direction (A).

12. Electric fan (30), in particular radiator fan of a motor vehicle,
- with an electric motor (31), and
- with a pressure side (20), and a vacuum side (19), wherein the fan (31) comprises a rotor hub assembly (1) according to one of the preceding claims and is formed and designed in such way as to convey air from the vacuum side (19) to the pressure side (20).

13. Electric fan according to claim 12,
**characterized in**
**that** on the pressure side (20) an inlet opening (32), in particular a circumferential inlet gap (32), for the cooling air stream from the pressure side (20) to the vacuum side (19) is provided.

## Revendications

1. Agencement de moyeu de rotor (1) pour un ventilateur électrique (30), notamment pour un ventilateur de radiateur d'un véhicule automobile, comprenant
- une cloche de moyeu (2) en rotation en cours de fonctionnement, qui comporte sur sa face intérieure des guides de sortie d'air (3) qui sont disposés et formés de manière à guider et accélérer l'air de refroidissement,
- une cloche de fermeture de circuit magnétique (4) disposée à l'intérieur de la cloche de moyeu (2), ladite cloche de fermeture de circuit magnétique comportant des ouvertures de passage d'air (5), qui forment, en commun avec les guides de sortie d'air (3) de la cloche de moyeu (2), des sorties d'air traversantes (6) pour un flux d'air de refroidissement allant du côté pression (20) vers le côté dépression (19) du ventilateur (30),
**caractérisé en ce**
**que** les guides de sortie d'air (3) dans la cloche de moyeu (2) forment respectivement une sortie d'air (6) d'une orientation sensiblement radiale, qui est logée dans un creux (10) dans un fond (9) de la cloche de moyeu (2) et/ou est formée dans un évidement (11) dans la paroi périphérique (12) de la cloche de moyeu (2), de sorte que le courant d'air de refroidissement est dirigé vers l'extérieur dans la direction radiale.

2. Agencement de moyeu de rotor selon la revendication 1,
**caractérisé en ce**
**que** les ouvertures de passage d'air (5) et les guides de sortie d'air (3) sont réalisés de manière telle, que l'air de refroidissement soit évacué au moins en partie en direction radiale (R).

3. Agencement de moyeu de rotor selon l'une des revendications précédentes,
**caractérisé en ce**
**que** les guides de sortie d'air (3) sont configurés à la manière d'une roue à ailettes.

4. Agencement de moyeu de rotor selon la revendication 3,
**caractérisé en ce**
**que** les guides de sortie d'air (3) comportent des nervures (8) qui s'étendent entre le fond (9) de la cloche de moyeu et la cloche de fermeture de circuit magnétique

5. Agencement de moyeu de rotor selon la revendication 4,
**caractérisé en ce**
**que** les nervures (8) s'étendent dans la direction radiale (R) et/ou s'étendent en forme d'arc dans la direction radiale et périphérique (R, U).

6. Agencement de moyeu de rotor selon l'une des revendications précédentes,
**caractérisé en ce**
**que** la cloche de fermeture de circuit magnétique (4) est fabriquée en un matériau métallique, notamment en acier, et/ou que la cloche de moyeu (2) est fabriquée en un matériau non métallique, notamment en plastique.

7. Agencement de moyeu de rotor selon l'une des revendications précédentes,
**caractérisé en ce**
**que** la cloche de fermeture de circuit magnétique (4) est couplée à la cloche de moyeu (2) dans une position prédéterminée de manière fixe en rotation par rapport à la cloche de moyeu (2).

8. Agencement de moyeu de rotor selon l'une des revendications précédentes,
**caractérisé en ce**
**que** la cloche de fermeture de circuit magnétique (4) comporte un fond (17), qui comporte un décrochement (7) périphérique orienté à l'encontre de la cloche de moyeu (2), les ouvertures de passage d'air (5) étant disposées dans la zone du décrochement (7) et/ou s'étendant radialement vers l'extérieur à partir du décrochement (7).

9. Agencement de moyeu de rotor selon l'une des revendications précédentes,
**caractérisé en ce**
**que** la sortie d'air (6) comporte une poche (13) prolongeant la surface d'aube des guides de sortie d'air (3) et/ou est réalisée avec une proéminence axiale (15) orientée de manière périphérique dans la direction de rotation (14) vers la sortie d'air (6) et un creux axial (16) orienté de manière périphérique à l'encontre de la direction de rotation (14) vers la sortie d'air (6).

10. Agencement de moyeu de rotor selon l'une des revendications précédentes,
**caractérisé en ce**
**que** la cloche de fermeture de circuit magnétique (4) comporte une pluralité d'évidements (21, 22, 23) de types et de tailles différents, en particulier des trous oblongs (21, 22) s'évasant radialement avec un angle d'ouverture constant et/ou des évidements (23) pour former de rayons (24), qui notamment forment simultanément les ouvertures de passage d'air (5).

11. Agencement de moyeu de rotor selon l'une des revendications précédentes,
**caractérisé en ce**
**qu'**au centre du fond (17) de la cloche de fermeture de circuit magnétique (4) des évidements (21, 22) sont formés en tant qu'ouvertures de passage d'air axiales (5'), et au centre du fond (9) de la cloche de moyeu (2) sont prévus des évidements (25), qui sont réalisés en tant que guides de sortie d'air (3'), et qui forment, en commun avec les ouvertures de passage d'air axiales (5'), des sorties d'air axiales continues (6') pour l'évacuation de l'air de refroidissement dans la direction axiale (A).

12. Ventilateur électrique (30), en particulier le ventilateur du radiateur d'un véhicule à moteur,
- avec un moteur électrique (31), et
- avec un côté pression (20), et un côté dépression (19), dans lequel le ventilateur (31) comporte un agencement de moyeu de rotor (1) selon à l'une des revendications précédentes et est configuré et agencé pour refouler de l'air à partir du côté dépression (19) vers le côté pression (20).

13. Ventilateur électrique selon la revendication 12,
**caractérisé en ce**
**que** sur le côté de la pression (20) il est prévu une ouverture d'entrée (32), notamment une fente d'entrée périphérique (32), pour le flux d'air de refroidissement allant du côté de la pression (20) vers le côté du dépression.
